# FASCICULE DE BREVET EUROPEEN

(11) **EP 0 922 610 B1**
(45) Date de publication et mention de la délivrance du brevet: **19.03.2003**
(21) Numéro de dépôt: 98403109.6
(22) Date de dépôt: 09.12.1998
(51) Int. Cl.: B60P 3/14

(54) **Engin mobile, à moteur ou non, associé à une installation de distribution à haute pression de produits tels que peinture, enduits et analogues**
Fahrbare Arbeitsmasken, entweder motorangetrieben oder nicht, angeordnet für Hochdruckdistribution von Produkten wie Farben, Putz und dergleichen
Mobile machine, motorised or not, arranged for high-pressure distribution of products such as paint, plaster and similar

(30) Priorité: 10.12.1997 FR 9715638
(43) Date de publication de la demande: 16.06.1999
(73) Titulaire: Société Financière et de Réalisation (SFIR) SA, 76000 Rouen (FR)
(72) Inventeur: Noel, Dominique Camille Paul, Rouen (Seine Maritime) (FR)
(74) Mandataire: Rataboul, Michel Charles

(56) Documents cités:
- EP-A- 0 024 846
- DE-U- 1 925 098
- DE-U- 29 605 861
- FR-A- 2 676 406
- GB-A- 2 248 884
- US-A- 3 904 117
- US-A- 5 349 980
- PATENT ABSTRACTS OF JAPAN vol. 18, no. 602 (M-1705), 16 novembre 1994 & JP 06 227309 A (CATERPILLAR ET AL), 16 août 1994

## Description

La présente invention concerne le domaine de l'application de produits sur des surfaces relativement grandes et étagées souvent selon plusieurs niveaux, ce qui est le cas d'application de peinture et d'enduit sur les murs et cloisons des locaux, à l'intérieur comme à l'extérieur.

Lorsqu'il s'agit de peindre ou d'enduire plusieurs locaux, l'approvisionnement en peinture est une opération très pénible et grande consommatrice de temps puisqu'il faut transporter les récipients pleins depuis un véhicule, les déplacer de pièce en pièce, puis les descendre lorsqu'ils sont vides, de sorte que, pour des raisons de poids à porter à bout de bras, il faut limiter les dimensions des récipients et, donc, multiplier les allées et venues et, donc, les pertes de temps.

On a déjà pensé à améliorer ces opérations en minimisant les manutentions de récipients sur chantier.

Pour fixer l'Etat de la Technique, on peut citer les documents suivants :
- US-A-3 904 117 qui décrit un véhicule spécifique destiné à effectuer des travaux de ravalement de façades d'immeubles et qui est équipé de roues larges et de pneus à basse pression, afin de préserver les végétaux sur lesquels le véhicule doit rouler lorsqu'il doit longer de près des immeubles entourés de gazon et de fleurs.
   Ce véhicule possède une flèche télescopique montée mobile et dont l'extrémité porte une nacelle pour un opérateur. En outre, ce véhicule comporte des réservoirs contenant différents produits tels que détergents, produits de nettoyage et de décapage, eau, peinture, ainsi que deux conduits associés chacun à une pompe et dont l'extrémité est munie d'un dispositif d'aspersion.
   Ce véhicule est très spécifiquement adapté au ravalement des façades et n'est pas utilisable pour appliquer de la peinture à l'intérieur de locaux.
- JP-A-06 227 309 qui concerne un véhicule comprenant une unité de peinture composée d'un réservoir, d'un compresseur d'air et d'une pompe.
   De l'air est insufflé par un orifice ménagé dans un pistolet d'aspersion pour permettre la projection de peinture.
   Outre sa complexité de conception, cette installation présente l'inconvénient d'utiliser de l'air comprimé, ce qui nécessite deux conduits depuis le véhicule jusqu'au pistolet, ce qui rend impossible l'application de peinture à distance importante, et à fortiori en étages élevés, pour des raisons pratiques évidentes.
- FR-A-2 676 406 qui décrit un véhicule spécialement conçu pour la distribution de peinture au moyen d'une motopompe électrique disposée à la partie supérieure d'une structure. Ces dispositions ne permettent pas d'alimenter plus d'un seul conduit et sont donc réservées à des travaux relativement modestes, à des étages peu élevés. De plus, la pression employée nécessite un tuyau renforcé mais il ne peut pas être long, pour atteindre les plus hauts étages d'un bâtiment, faute de tout dispositif de manutention. La présence de l'enrouleur mentionné dans ce document est tout à fait fortuite puisque cet enrouleur n'est pas nécessaire au bon fonctionnement de l'invention qui y est décrite, et qu'en outre il n'est ni revendiqué, ni représenté sur les figures. Ces dispositions sont donc réservées à des travaux relativement modestes, à des étages peu élevés de bâtiments.
- EP-A-0 024 846 décrit un appareil de pompage pour transférer de la bière d'un véhicule vers un réservoir situé dans une cave par exemple. Cet appareil est une unité mobile que l'on peut adapter à plusieurs véhicules de livraison par exemple. Il doit donc être facilement maniable. Par conséquent :
   - d'une part l'enrouleur n'est là que pour diminuer le volume de stockage du tuyau afin de réduire les dimensions de l'appareil de pompage ;
   - d'autre part, le tuyau employé n'a aucune structure particulière puisqu'il ne sert qu'à transférer le liquide d'un lieu à un autre. La faible pression utilisée ne sert qu'au transport du liquide.

La présente invention concerne une installation mobile de grande puissance, permettant d'effectuer des travaux sur de très grandes surfaces, y compris à des étages élevés.

A cette fin, l'invention a pour objet un engin roulant tel qu'un véhicule utilitaire, un camion, une camionnette, une remorque ou un petit chariot, du type ayant un compartiment présentant un plancher, des parois et un toit, afin de déterminer une zone du plancher dite "zone de stockage" complètement dégagée et devant recevoir au moins un réservoir amovible, au droit d'une porte d'accès au compartiment, le compartiment contenant un portique situé au-dessus de la zone de stockage et en travers du passage ménagé par la porte (6-7), à proximité du toit, le ou les réservoirs amovibles étant à une hauteur inférieure à celle qui sépare le plancher du portique, réservoir qui contient un produit devant être appliqué par pulvérisation sous haute pression sur des surfaces, notamment de la peinture, un conduit flexible étant prévu avec une extrémité reliée à une pompe tandis que l'autre est libre et porte un pistolet, engin **caractérisé en ce que** le portique forme un support pour au moins un enrouleur d'un conduit flexible d'au moins dix mètres de longueur, la pompe étant de type à haute pression, c'est-à-dire apte à mettre le produit sous une pression d'au moins 100 bars.

Selon des modes de réalisation de l'invention:
⇒ la pompe présente un orifice d'aspiration auquel est raccordé une extrémité d'un tuyau dont l'autre extrémité libre doit être plongée dans le produit du ou des réservoirs;
⇒ le tuyau présente un segment flexible situé entre l'orifice d'entrée de la pompe et une extrémité libre d'une canne d'aspiration formée d'un segment tubulaire rigide, et devant être plongée dans le produit du ou des réservoirs, la canne d'aspiration ayant une hauteur au moins égale à celle des réservoirs;
⇒ l'orifice d'entrée de la pompe est raccordé à un orifice de refoulement d'une pompe secondaire dite "pompe de gavage" dont un orifice d'entrée est relié à un orifice situé à la base d'un réservoir de produit;
⇒ chacun des conduits flexibles est raccordé à un orifice de sortie de pompe;
⇒ la pompe est associée à un moteur d'entraînement du type à air comprimé, relié à un compresseur placé sur le plancher hors de la zone dégagée;
⇒ la pompe est associée à un moteur d'entraînement hydraulique, relié à une centrale placée sur le plancher hors de la zone dégagée.

L'invention sera mieux comprise par la description détaillées ci-après faite en référence au dessin annexé. Bien entendu, la description et le dessin ne sont donnés qu'à titre d'exemple indicatif et non limitatif.

La figure 1 est une vue schématique partielle de profil, de l'intérieur d'un véhicule conforme à l'invention.

La figure 2 est une vue schématique du véhicule de la figure 1, vu de l'arrière et portes ouvertes.

La figure 3 est une vue schématique partielle en plan, de l'intérieur du véhicule des figures 1 et 2.

En se reportant au dessin, on voit un véhicule conforme à l'invention qui comprend un compartiment 1 délimité par un plancher 2, un toit 3, des parois latérales 4 et 5 et une paroi arrière qui s'ouvre par deux battants de porte 6 et 7.

On a représenté deux roues avant 8 et deux roues arrière 9, qui évoquent un véhicule autonome, automobile, tel qu'un camion léger ou une camionnette, mais dans la réalité il peut s'agir de tout autre véhicule, y compris une simple remorque ou engin roulant.

Le véhicule comprend une structure fixe formant un portique 10, constitué de montants latéraux 11 et 12 supportant une traverse 13 située au-dessus de l'ouvrant des portes 6 et 7, près du toit 3.

La zone du plancher 2 située sous le portique 10, dite "zone de stockage", est entièrement dégagée afin de pouvoir y déposer une palette 14 portant quatre réservoirs, ici des fûts 15, en introduisant le tout par le passage dégagé à l'arrière du véhicule, lorsque les deux battants de porte 6 et 7 sont ouverts. Les fûts 15 contiennent un produit devant être pulvérisé sur des surfaces, notamment de la peinture ou de l'enduit pour les murs de bâtiments et de locaux.

La traverse fixe 13 supporte deux ensembles enrouleurs 16 et 17 comprenant chacun un touret monté rotatif et formé d'un moyeu cylindrique flanqué de deux joues latérales.

Le touret de l'enrouleur 16 reçoit un long conduit flexible 18 dont l'extrémité libre est munie d'un pistolet de projection 20. Symétriquement, le touret de l'enrouleur 17 reçoit un long conduit flexible 19 dont l'extrémité libre est munie d'un pistolet de projection 21.

Par ailleurs, le compartiment 1 contient une pompe 25 associée à un moteur 26 du type à air comprimé et relié, à cette fin, à un compresseur d'air 27 par une tubulure 28.

La pompe 25 possède un orifice d'aspiration auquel est raccordée une extrémité d'un tuyau flexible 29 dont l'autre extrémité est reliée à une canne d'aspiration 30 devant être plongée sélectivement dans l'un des quatre fûts 15.

La pompe 25 possède également un orifice de refoulement destiné à l'alimentation des conduits 18 et 19. On peut prévoir deux orifices de refoulement, un pour chaque conduit 18-19 mais, ici, on a choisi la solution plus simple qui consiste à placer sur un unique orifice de refoulement un embout en T, c'est-à-dire ayant d'une part une entrée et d'autre part deux sorties opposées, cette entrée étant raccordée à l'orifice de refoulement de la pompe 25.

Sur l'une de ces deux sorties est raccordé un conduit flexible 31 qui aboutit à l'enrouleur 16, afin de relier le refoulement de la pompe 25 au conduit 18.

Le touret de l'enrouleur 16 étant nécessairement monté rotatif et le conduit 18 enroulé sur ledit touret se déplaçant avec lui, il faut adopter des moyens permettant à l'extrémité du conduit 31 d'être fixe alors que l'extrémité du conduit 18 engagée sur le touret ne l'est pas. De tels moyens existent couramment et sont à la portée de l'Homme de Métier, de sorte qu'ils ne seront pas décrits en détails ici.

Sur le dessin, on a simplement représenté un embout fixe 32 auquel l'extrémité du conduit 31 est fixée.

Sur l'autre des deux sorties, est raccordé un conduit flexible 33 qui aboutit à l'enrouleur 17, afin de relier le refoulement de la pompe 25 au conduit 19.

Les dispositions des deux conduits 31 et 33 sont les mêmes et l'on a représenté un embout fixe 34 symétrique à l'embout fixe 32.

Le fonctionnement de l'installation qui vient d'être décrite est le suivant :

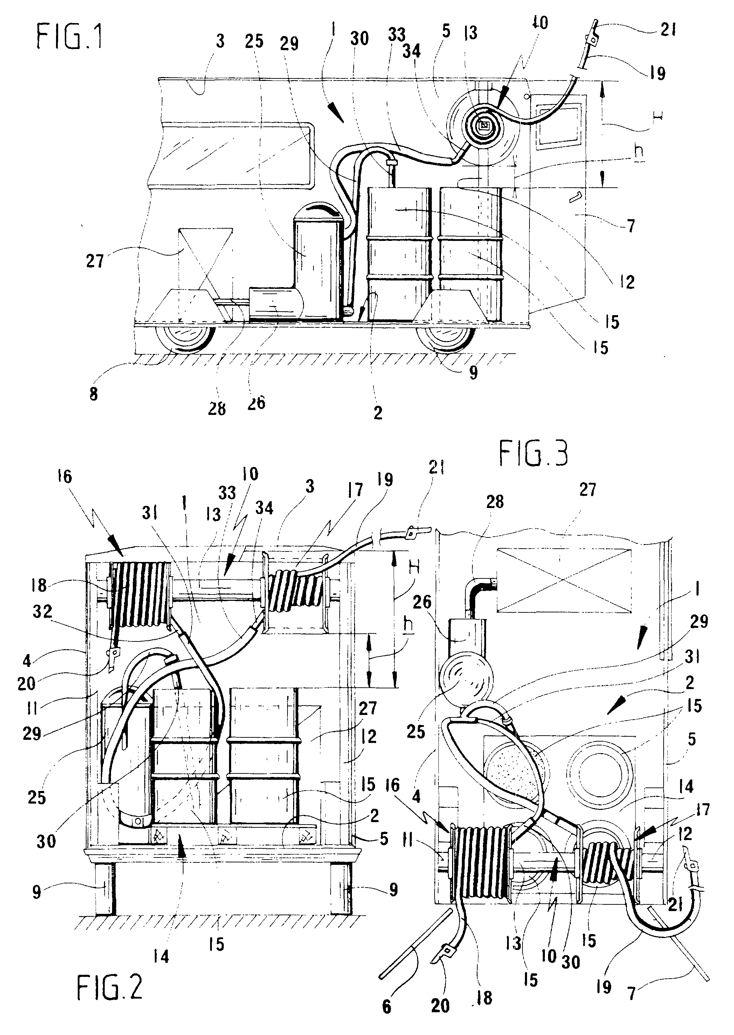

Tout d'abord, on place les fûts 15 pleins sur la zone de stockage. On observe que sur la figure 1, les fûts 15 sont posés à même le plancher 2 du véhicule. Sur les figures 2 et 3, on a représenté une autre variante selon laquelle les fûts 15 sont posés sur une palette de manutention 14 de tout type connu sur laquelle ils sont de préférence immobilisés, ce qui permet de charger et de décharges les fûts 15 en une seule fois, au moyen d'un chariot élévateur ou d'un transpalette.

Afin que les opérations de chargement et de déchargement des fûts 15 (avec ou sans palette 14) soit aisée, il faut que la hauteur libre h entre le dessus des fûts 15 et la partie la plus basse des enrouleurs 16 et 17 soit suffisante pour permettre les débattements inévitables, sans risque de chocs sur les enrouleurs 16 et 17. La partie la plus basse des enrouleurs peut être le point inférieur des joues latérales solidaires du moyeu d'enroulement des conduits flexibles 18 et 19, ou les embouts 32 et 34.

En position de transport, tous les fûts sont fermés et la canne d'aspiration 30 est placée hors des fûts, à un endroit où elle peut être immobilisée. Les conduits 18 et 19 sont complètement enroulés sur leur touret respectif; Eventuellement, on immobilise les tourets et/ou l'extrémité des conduits 18 et 19.

Lorsque le véhicule est arrivé sur le chantier, les portes 6 et 7 sont ouvertes. L'un des fûts 15 est ouvert en retirant le couvercle qui obture sa partie supérieure. Dans ce fût, on introduit la canne d'aspiration 30.

La hauteur de la canne d'aspiration 30 doit être au moins égale à celle des fûts 15 car il faut, évidemment, qu'elle puisse aspirer entièrement le contenu du fût, c'est-à-dire que son extrémité libre doit pouvoir être très proche du fond du fût.

Lorsque ce premier fût 15 aura été entièrement vidé, il faudra retirer la canne d'aspiration 30 pour la plonger dans un autre fût 15 encore plein.

Pour que cette manoeuvre soit possible, il faut que la hauteur libre H entre le dessus des fûts 15 et le toit 3 soit suffisante pour que la canne d'aspiration 30 puisse s'étendre au-dessus du bord des fûts 15, éventuellement en étant oblique.

Cette hauteur H est différente selon que les fûts 15 sont posés directement sur le plancher 2 ou sur une palette de manutention 14.

Ayant plongé la canne d'aspiration 30 dans un fût, on met en route le compresseur 27 afin qu'il fournisse au moteur 26 l'air comprimé nécessaire à son fonctionnement et à celui de la pompe 25, qui doit aspirer le contenu du fût 15 et le refouler dans les conduits 31 et 33.

Il est alors possible à deux opérateurs de dérouler les conduits flexibles 18 et 19 (ou l'un d'eux seulement), de les amener au niveau des travaux à effectuer et de pulvériser le produit mis sous pression dans ces conduits, au moyen du pistolet 20-21.

Quand le premier fût 15 est vide, la canne d'aspiration 30 en est retirée et est plongée dans le produit d'un autre fût 15 et ainsi de suite jusqu'à avoir épuisé le produit des quatre fûts 15.

Les fûts vides sont remplacés par d'autres pleins, notamment en déchargeant la palette 14 et en lui substituant une autre palette portant des fûts pleins.

Le but de l'invention étant de permettre une intervention dans des locaux de surfaces étendues et situés à des étages élevés, les conduits 18 et 19 doivent être très longs, c'est-à-dire d'au moins dix mètres.

De ce fait même, le produit doit être propulsé à pression et débit importants, malgré la difficulté spécifique à l'élévation du produit sur une hauteur de plusieurs étages.

Or, selon l'état de la technique, le revêtement de surfaces est réalisé à partir de produits (en particulier des peintures) amenés au pistolet à pression faible ou moyenne par une pompe de petite puissance, la pulvérisation étant due à de l'air comprimé expulsé à proximité de l'orifice du pistolet où il est dirigé par un second tuyau, distinct de celui des produits.

Or, cela est inutilisable à grande distance et surtout à hauteur d'étages élevés, de sorte que le procédé de l'invention prévoit un seul conduit (18-19) pour les produits, sans utilisation d'air comprimé.

Outre qu'un seul conduit permet d'utiliser des enrouleurs et autorise le parcours des tuyaux soit le long de façades et par des fenêtres, soit par un escalier, puis les passages du pistolet dans toutes les pièces d'un local, sans difficultés, il devient possible d'utiliser des pompes puissantes, de rapport 30/1 à 80/1 par exemple, capables d'amener les produits à 100 bars et plus au niveau du pistolet.

Plutôt qu'un pistolet 20-21, on peut utiliser un rouleau à peindre approvisionné par les conduits 18 et 19.

Ce rouleau est placé à une extrémité d'une canne rigide dont l'autre extrémité est assujettie au conduit 18-19.

Le rouleau peut être approvisionné de l'intérieur ou de l'extérieur. Lorsqu'il est approvisionné de l'intérieur, le conduit est raccordé dans l'axe de rotation du rouleau et le produit traverse le rouleau pour imprégner sa surface. Cet ensemble est plus lourd et plus dispendieux qu'avec une alimentation extérieure car, alors, le produit est pulvérisé directement sur le rouleau et l'action de va-et-vient du rouleau sur la surface à enduire étale le produit en couche plus mince, grâce à quoi on utilise moins de produit à surface égale.

Une pompe bien adaptée au procédé conforme à l'invention est de type "à cloche", garantissant à la fois une haute pression et l'absence, dans le conduit 18-19, de bulles d'air provoquant des pertes de charge et des irrégularités de pulvérisation.

Selon les dimensions du véhicule, on peut prévoir au plancher une zone de stockage plus ou moins étendue, non seulement en largeur mais également en longueur, c'est-à-dire entre la porte arrière 6-7 et le compresseur 27, dans l'exemple décrit.

Compte tenu des dimensions normalisées des palettes de manutention et des impératifs routiers, on peut adopter facilement soit quatre fûts 15 (comme décrit et représenté) soit six.

De même, on peut prévoir un seul enrouleur central, deux enrouleurs latéraux (comme décrit et représenté) ou plus encore, soit sur la même traverse, soit sur des traverses distinctes, dès lors que l'on respecte les conditions de hauteur libre à l'aplomb de la zone de stockage.

Il peut être avantageux d'utiliser une pompe à moteur hydraulique vis-à-vis de la puissance développée et aussi pour éviter la présence de gouttelettes d'eau dans l'air comprimé car, par temps froid, ces gouttelettes risquent de geler et de compromettre le bon fonctionnement de la pompe.

La centrale hydraulique nécessaire au fonctionnement d'un tel moteur se substitue alors au compresseur 27 dans l'aménagement de l'engin.

Parmi les nombreuses applications possibles de l'invention, il en est une qui est particulièrement avantageuse, à savoir la finition des cloisons réalisées au moyen de plaques de plâtre.

En effet, il est inévitable que des fentes subsistent entre les plaques juxtaposées et superposées, de sorte que l'on est obligé de masquer ces fentes pour assurer la continuité et la planéité des cloisons.

Grâce à l'invention, on peut très rapidement obturer les fentes au moyen d'un produit ad hoc, puis de lisser le produit, après quoi on applique et on colle des bandes de papier sur les fentes obturées, puis on termine en appliquant à nouveau du produit qu'on lisse en prenant garde d'éliminer toute surépaisseur due aux bandes de papier.

Ces opérations sont effectuées avec le matériel de l'invention en un temps plus court qu'avec les moyens connus et l'on obtient une qualité de finition meilleure.

Naturellement, on peut utiliser des réservoirs contenant des produits différents devant être envoyés sous pression soit à un même conduit, soit à des conduits distincts. Avec l'exemple décrit, on peut prévoir que le conduit 18 est alimenté à partir d'un fût 15 contenant un enduit, alors que le conduit 19 est alimenté en peinture, ce qui permet d'augmenter considérablement le rendement de l'installation, tout en parvenant à une très bonne qualité de l'ouvrage.

On peut également prévoir un distributeur (non représenté) par lequel un seul et même conduit reçoit sélectivement des produits différents.

## Revendications

1. Engin roulant tel qu'un véhicule utilitaire, un camion, une camionnette, une remorque ou un petit chariot, du type ayant un compartiment présentant un plancher, des parois et un toit, afin de déterminer une zone du plancher dite "zone de stockage" complètement dégagée et devant recevoir au moins un réservoir amovible, au droit d'une porte d'accès au compartiment, le compartiment (1) contenant un portique (10) situé au-dessus de la zone de stockage et en travers du passage ménagé par la porte (6-7), à proximité du toit (3), le ou les réservoirs amovibles (15) étant à une hauteur inférieure à celle qui sépare le plancher (2) du portique (10), réservoir (15) qui contient un produit devant être appliqué par pulvérisation sous haute pression sur des surfaces, notamment de la peinture un conduit flexible étant prévu avec une extrémité reliée à une pompe (25) tandis que l'autre est libre et porte un pistolet (21), engin **caractérisé en ce que**, le portique (10) forme un support pour au moins un enrouleur (16-17) d'un conduit flexible (18-19) d'au moins dix mètres de longueur la pompe (25) étant de type à haute pression, c'est-à-dire apte à mettre le produit sous une pression d'au moins 100 bars.

2. Engin selon la revendication 1, **caractérisé en ce que** la pompe (25) présente un orifice d'aspiration auquel est raccordé une extrémité d'un tuyau (29-30) dont l'autre extrémité libre doit être plongée dans le produit du ou des réservoirs (15).

3. Engin selon la revendication 2, **caractérisé en ce que** le tuyau (29-30) présente un segment flexible (29) situé entre l'orifice d'entrée de la pompe (25) et une extrémité libre d'une canne d'aspiration (30) formée d'un segment tubulaire rigide, et devant être plongée dans le produit du ou des réservoirs (15), la canne d'aspiration (30) ayant une hauteur au moins égale à celle des réservoirs (15).

4. Engin selon la revendication 1, **caractérisé en ce que** l'orifice d'entrée de la pompe est raccordé à un orifice de refoulement d'une pompe secondaire dite "pompe de gavage" dont un orifice d'entrée est relié à un orifice situé à la base d'un réservoir de produit.

5. Engin selon la revendication 1, **caractérisé en ce que** chacun des conduits flexibles (18 et 19) est raccordé à un orifice de sortie de pompe (25).

6. Engin selon la revendication 1, **caractérisé en ce que** la pompe (25) est associée à un moteur d'entraînement (26) du type à air comprimé, relié à un compresseur (27) placé sur le plancher (2) hors de la zone dégagée.

7. Engin selon la revendication 1, **caractérisé en ce que** la pompe est associée à un moteur d'entraînement hydraulique, relié à une centrale placée sur le plancher (2) hors de la zone dégagée.

## Patentansprüche

1. Fahrbares Gerät wie ein Nutzfahrzeug, ein Lastkraftwagen, ein kleiner Lastkraftwagen, ein Anhängefahrzeug oder ein kleiner 4-rädriger Karren vom Typ, der ein Abteil hat, das einen Boden, Wände und ein Dach aufweist, um eine Zone des Bodens, eine sogenannte "Aufbewahrungszone" zu bestimmen, die vollkommen frei ist und mindestens einen abnehmbaren Behälter aufnehmen soll auf gleicher Höhe wie eine Zugangstür zum Abteil, Abteil (1) aufweisend einen Portalrahmen (10), der oberhalb der Aufbewahrungszone und quer zum Durchgang gelegen ist, der durch die Tür (6-7), in Nähe des Daches (3) angeordnet ist, wobei der abnehmbare oder die abnehmbaren Behälter (15) in einer geringeren Höhe als diejenige Höhe ist bzw. sind, die den Boden (2) vom Portalrahmen (10) trennt, Behälter (15), der ein Produkt, insbesondere Farbe enthält, das durch Hochdruckspritzen auf Oberflächen aufgetragen werden soll, eine flexible Leitung, die bei einem Ende vorgesehen ist, das mit einer Pumpe (25) verbunden ist, während das andere frei ist und eine Pistole (21) trägt, welches Gerät **dadurch gekennzeichnet ist, dass** der Portalrahmen (10) einen Träger für mindestens eine Wickelmaschine (16-17) für eine flexible Leitung (18-19) von mindestens zehn Metern Länge bildet, wobei die Pumpe (25) vom Hochdrucktyp ist, d. h. in der Lage ist, das Produkt bei einem Druck von mindestens 100 Bar aufzutragen.

2. Gerät nach Anspruch 1,
**dadurch gekennzeichnet, dass** die Pumpe (25) eine Ansaugöffnung aufweist, an der ein Ende eines Rohres (29-30) angeschlossen ist, dessen anderes freies Ende in dem Produkt des Behälters oder der Behälter (15) getaucht sein soll.

3. Gerät nach Anspruch 2,
**dadurch gekennzeichnet, dass** das Rohr (29-30) ein flexibles Segment (29) aufweist, das zwischen der Einlassöffnung der Pumpe (25) und einem freien Ende eines Ansaugrohrs (30) gelegen ist, das aus einem starren röhrenförmigen Segment geformt ist und in das Produkt des Behälters oder der Behälter (15) getaucht werden soll, wobei das Ansaugrohr (30) eine Höhe hat, die mindestens gleich der Höhe der Behälter (15) ist.

4. Gerät nach Anspruch 1,
**dadurch gekennzeichnet, dass** die Einlassöffnung der Pumpe an eine Förderöffnung einer sekundären Pumpe, einer sogenannten "Aufladungspumpe" angeschlossen ist, deren Einlassöffnung mit einer Öffnung verbunden ist, die an der Basis eines Produktbehälters gelegen ist.

5. Gerät nach Anspruch 1,
**dadurch gekennzeichnet, dass** eine jede der flexiblen Leitungen (18 und 19) an einer Austrittsöffnung der Pumpe (25) angeschlossen ist.

6. Gerät nach Anspruch 1,
**dadurch gekennzeichnet, dass** die Pumpe (25) einem Antriebsmotor (26) vom Drucklufttyp zugeordnet ist, der mit einem Kompressor (27) verbunden ist, der am Boden (2) außerhalb der freigelegten Zone angeordnet ist.

7. Gerät nach Anspruch 1,
**dadurch gekennzeichnet, dass** die Pumpe einem Hydroantriebsmotor zugeordnet ist, der mit einer Zentrale verbunden ist, die am Boden (2) außerhalb der freigelegten Zone angeordnet ist.

## Claims

1. Mobile machine such as a commercial vehicle, a lorry, a van, a trailer or a small truck, of the type with a compartment having a floor, walls and a roof, in order to determine an area of the floor known as a "storage area", completely clear and having to receive at least one removable tank, in line with an access door to the compartment, the compartment (1) containing a gantry (10) located above the storage area and across the passage made by the door (6-7), near the roof (3), the removable tank(s) (15) having a height less than that separating the floor (2) from the gantry (10), which tank (15) contains a product that has to be applied by spraying at high pressure on surfaces, for instance paint, a flexible conduit being provided with one end connected to a pump (25) while the other is free and carries a gun (21), the machine being **characterised in that** the gantry (10) forms a support for at least one reel (16-17) for a flexible conduit (18-19) at least ten meters long, the pump (25) being of the high-pressure type, i.e. capable of putting the product under a pressure of at least 100 bars.

2. Machine according to Claim 1, **characterised in that** the pump (25) has a suction orifice to which one end of a pipe (29-30) is connected, the other free end of which has to be immersed in the product in the tank(s) (15).

3. Machine according to Claim 2, **characterised in that** the pipe (29-30) has a flexible segment (29) located between the inlet orifice of the pump (25) and a free end of a suction pipe (30) formed of a rigid tubular segment, and having to be immersed in the product in the tank(s) (15), the suction pipe (30) having a height at least equal to that of the tanks (15).

4. Machine according to Claim 1, **characterised in that** the inlet orifice of the pump is connected to a discharge orifice of a secondary pump known as a "booster pump", an inlet orifice of which is connected to an orifice located at the base of a tank of product.

5. Machine according to Claim 1, **characterised in that** each of the flexible conduits (18 and 19) is connected to a pump outlet orifice (25).

6. Machine according to Claim 1, **characterised in that** the pump (25) is associated with a drive motor (26) of the compressed-air type, connected to a compressor (27) placed on the floor (2) outside the clear area.

7. Machine according to Claim 1, **characterised in that** the pump is associated with a hydraulic drive motor, connected to a power unit placed on the floor (2) outside the clear area.
